(19)

Europäisches
Patentamt
European
Patent Office
Office européen
des brevets

(11) **EP 4 764 888 A1**

(12) **EUROPEAN PATENT APPLICATION**
published in accordance with Art. 153(4) EPC

(43) Date of publication:
**24.06.2026 Bulletin 2026/26**

(21) Application number: **24861553.6**

(22) Date of filing: **21.05.2024**

(51) International Patent Classification (IPC):
**G06F 16/335** (2019.01)

(52) Cooperative Patent Classification (CPC):
**G06F 16/334; G06F 16/335; G06F 40/30;
G06N 3/04; G06N 3/08;** Y02D 10/00

(86) International application number:
**PCT/CN2024/094382**

(87) International publication number:
**WO 2025/050705 (13.03.2025 Gazette 2025/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.09.2023 CN 202311159877**

(71) Applicant: **Huawei Cloud Computing
Technologies Co., Ltd.
Gui'an New District, Guizhou 550025 (CN)**

(72) Inventors:
• **CHEN, Chong
Guiyang, Guizhou 550025 (CN)**
• **MA, Yixiao
Guiyang, Guizhou 550025 (CN)**

(74) Representative: **Goddar, Heinz J.
Boehmert & Boehmert
Anwaltspartnerschaft mbB
Pettenkoferstrasse 22
80336 München (DE)**

(54) **METHOD AND APPARATUS FOR TRAINING MODEL FOR SEMANTIC VECTOR-BASED
INFORMATION RETRIEVAL**

(57) This application discloses a method and an apparatus for training a semantic vector-based information retrieval model in the field of artificial intelligence. The method includes: obtaining a first training data set and a second training data set, where first training data is any piece of training data in the first training data set, and the first training data includes a first query text, a first retrieval text corresponding to the first query text and having a positive label, and a second retrieval text corresponding to the first query text and having a negative label; and second training data is any piece of training data in the second training data set, and the second training data includes a second query text, a third retrieval text that corresponds to the second query text, and an annotation of a degree of relevance between the second query text and the third retrieval text; updating a first information retrieval model based on the first training data set, to obtain a second information retrieval model; and updating the second information retrieval model based on the second training data set, to obtain a third information retrieval model. This application helps improve performance of the information retrieval model.

FIG. 3

Obtain training data in a first training data set and training data in a second training data set — S301

Update a first information retrieval model based on the training data in the first training data set, to obtain a second information retrieval model — S302

Update the second information retrieval model based on the training data in the second training data set, to obtain a third information retrieval model — S303

EP 4 764 888 A1

## Description

This application claims priority to Chinese Patent Application No. 202311159877.0, filed with the China National Intellectual Property Administration on September 8, 2023 and entitled "METHOD AND APPARATUS FOR TRAINING SEMANTIC VECTOR-BASED INFORMATION RETRIEVAL MODEL", which is incorporated herein by reference in its entirety.

## TECHNICAL FIELD

This application relates to the field of natural language processing, and in particular, to a method and an apparatus for training a semantic vector-based information retrieval model.

## BACKGROUND

Information retrieval (information retrieval, IR) is a technology for identifying information that satisfies user requirements from a large amount of information. A semantic vector-based information retrieval model is an important branch of the information retrieval technology. Among IR models, dual-tower model (also referred to as a dual-encoder model) is a common information retrieval model in the semantic vector-based retrieval technology, noted for its high retrieval efficiency. A principle of the dual-tower model may be briefly summarized as follows: The dual-tower model uses different encoders to encode query texts and retrieval texts, to separately obtain semantic vectors of the query texts and semantic vectors of the retrieval texts; calculate similarities between the semantic vectors of the query texts and the semantic vectors of the to-be-retrieved texts, and sort the to-be-retrieved texts in recommendation databases based on the similarities.

During the training of an information retrieval model, a substantial amount of high-quality training data is essential for improving its performance. The high-quality training data may be generally understood as data including query texts, retrieval texts corresponding to the query texts, and annotations indicating a degree of relevance between the query texts and the retrieval texts. In the training process, if the high-quality training data is insufficient, the performance of the information retrieval model may be adversely affected.

## SUMMARY

This application provides a method and an apparatus for training a semantic vector-based information retrieval model, to reduce dependence on a substantial amount of high-quality training data during training, and also improve information retrieval performance of the information retrieval model.

It should be understood that the method provided in embodiments of this application may be performed by the apparatus for training the semantic vector-based information retrieval model. The apparatus for training may be a terminal device, or may be some components in the terminal device, for example, a chip or a processor used in the terminal device; or may be a server, for example, a local server or a cloud server; or may be some components in the server, for example, a chip or a processor used in the server. This is not limited herein.

According to a first aspect, this application provides a method for training a semantic vector-based information retrieval model, where the method includes: obtaining training data in a first training data set and training data in a second training data set, where first training data is any piece of training data in the first training data set, and the first training data includes first query text, first retrieval text corresponding to the first query text and having a positive label, and second retrieval text corresponding to the first query text and having a negative label, and the second training data is any piece of training data in the second training data set, and the second training data includes second query text, third retrieval text that corresponds to the second query text, and an annotation of a degree of relevance between the second query text and the third retrieval text; further, updating a first information retrieval model based on the training data in the first training data set, to obtain a second information retrieval model; and updating the second information retrieval model based on the training data in the second training data set, to obtain a third information retrieval model, where the third information retrieval model is configured to: receive a third query text, determine a semantic vector of the third query text, and output an information retrieval result based on the semantic vector of the third query text.

Based on the method provided in the first aspect, when an amount of high-quality training data (that is, the training data in the second training data set mentioned in this application) is small, the information retrieval model may be first trained using training data (that is, the training data in the first training data set mentioned in this application) whose quality is slightly lower than that of the high-quality training data, to increase a scale of the training data; and then, the information retrieval model is trained using the high-quality training data, to improve quality of representing a semantic vector in an information retrieval process, thereby reducing dependence on a substantial amount of high-quality training data during training, and to improve information retrieval performance of the information retrieval model.

In a possible implementation, the first query text, fourth retrieval text that corresponds to the first query text and that is clicked, and fifth retrieval text that corresponds to the first query text and that has not been clicked are obtained; and a degree of relevance between the first query text and the fourth retrieval text and a degree of relevance between the first query text and the fifth retrieval text are determined. Further, the foregoing first retrieval text is determined from the fourth retrieval text, where the first retrieval text is a retrieval text whose degree of relevance to the first query text is greater than or equal to a first threshold; and the second retrieval text is determined from the fifth retrieval text, where the second retrieval text is a retrieval text whose degree of relevance to the first query text is less than or equal to a second threshold and whose degree of relevance to the first query text is greater than or equal to a third threshold. By implementing this possible implementation, a positive example (that is, retrieval text that has the positive label) and a negative example (that is, retrieval text that has the negative label) are annotated based on a degree of relevance between query text and each retrieval text, helping improve quality of training data in the obtained first training data set.

In a possible implementation, the first information retrieval model includes an encoder. In this case, training text of a third training data set is obtained; and the training text of the third training data set is input into the encoder, to obtain a first semantic vector corresponding to the training text, where the first semantic vector is generated based on a word vector of a word included in the training text and a positional vector of the word. The training text of the third training data set and the first semantic vector are input into a decoder, to obtain a second semantic vector, where the second semantic vector is generated based on the first semantic vector, the word vector of the word included in the training text, and the positional vector of the word. Text reconstruction is performed based on the second semantic vector, to obtain a reconstructed text; and further, a model parameter of the encoder is updated based on the reconstructed text and the training text. By implementing this possible implementation, compared with a manner in which a semantic vector is represented by an average value of word vectors of all words included in text, in this application, the semantic vector of the text is represented based on a word vector of each word and a positional vector of each word included in the text, and context information of each word in the text may be combined when the semantic vector of the text is generated, to help improve accuracy of representing the semantic vector of the text by the information retrieval model, and improve performance of the information retrieval model.

In a possible implementation, a loss function of the first information retrieval model is set based on a degree of relevance between a semantic vector of the first query text and a semantic vector of the first retrieval text and a degree of relevance between the semantic vector of the first query text and a semantic vector of the second retrieval text. Implementation of this possible implementation helps reduce a vector distance between the query text and the positive example (that is, the retrieval text that has the positive label), and increase a vector distance between the query text and the negative example (that is, the retrieval text that has the negative label), to improve the performance of the information retrieval model.

In a possible implementation, the loss function of the first information retrieval model satisfies the following condition:

$$P\left(d^+\middle|q, d^+, D_q^-\right) = \frac{exp(f(q, d^+)/\tau)}{exp(f(q, d^+)/\tau) + \sum_{d^-\in D_q^-} exp(f(q, d^-)/\tau)}$$

where q is the semantic vector of the first query text, $d^+$ is the semantic vector of the first retrieval text, $d^-$ is the semantic vector of the second retrieval text, $D_q^-$ is a semantic vector set to which the semantic vector of the second retrieval text belongs, $f(q, d^+)$ is the degree of relevance between the semantic vector of the first query text and the semantic vector of the first retrieval text, $f(q, d^-)$ is the degree of relevance between the semantic vector of the first query text and the semantic vector of the second retrieval text, and $\tau$ is a temperature parameter corresponding to the first information retrieval model.

According to a second aspect, this application provides an apparatus for training a semantic vector-based information retrieval model, where the apparatus includes: a transceiver unit 702, configured to obtain training data in a first training data set and training data in a second training data set, where first training data is any piece of training data in the first training data set, and the first training data includes first query text, first retrieval text corresponding to the first query text and having a positive label, and second retrieval text corresponding to the first query text and having a negative label, and the second training data is any piece of training data in the second training data set, and the second training data includes second query text, third retrieval text that corresponds to the second query text, and an annotation of a degree of relevance between the second query text and the third retrieval text; and a processing unit, configured to update a first information retrieval model based on the training data in the first training data set, to obtain a second information retrieval model. The processing unit is further configured to update the second information retrieval model based on the training data in the second training data set, to obtain a third information retrieval model, where the third information retrieval model is configured to: receive a third query text, determine a semantic vector of the third query text, and output an information retrieval result based on the semantic vector of the third query text.

For beneficial effects achieved by the apparatus provided in the second aspect, refer to the beneficial effects corresponding to the method provided in the foregoing first aspect. Details are not described herein again.

With reference to the second aspect, in a possible implementation, the transceiver unit 702 is further configured to obtain the first query text, fourth retrieval text that corresponds to the first query text and that is clicked, and fifth retrieval text that corresponds to the first query text and that has not been clicked. The processing unit is further configured to determine a degree of relevance between the first query text and the fourth retrieval text and a degree of relevance between the first query text and the fifth retrieval text. The processing unit is further configured to determine the foregoing first retrieval text from the fourth retrieval text, where the first retrieval text is a retrieval text whose degree of relevance to the first query text is greater than or equal to a first threshold. The processing unit is further configured to determine the second retrieval text from the fifth retrieval text, where the second retrieval text is a retrieval text whose degree of relevance to the first query text is less than or equal to a second threshold and whose degree of relevance to the first query text is greater than or equal to a third threshold.

With reference to the second aspect, in a possible implementation, the first information retrieval model includes an encoder. In this case, the transceiver unit 702 is further configured to obtain training text of a third training data set. The processing unit is further configured to input the training text of the third training data set into the encoder, to obtain a first semantic vector corresponding to the training text, where the first semantic vector is generated based on a word vector of a word included in the training text and a positional vector of the word. The processing unit is further configured to input the training text of the third training data set and the first semantic vector into a decoder, to obtain a second semantic vector, where the second semantic vector is generated based on the first semantic vector, the word vector of the word included in the training text, and the positional vector of the word. The processing unit is further configured to perform text reconstruction based on the second semantic vector, to obtain a reconstructed text. The processing unit is further configured to update a model parameter of the encoder based on the reconstructed text and the training text.

With reference to the second aspect, in a possible implementation, a loss function of the first information retrieval model is set based on a degree of relevance between a semantic vector of the first query text and a semantic vector of the first retrieval text and a degree of relevance between the semantic vector of the first query text and a semantic vector of the second retrieval text.

With reference to the second aspect, in a possible implementation, the loss function of the first information retrieval model satisfies the following condition:

$$P\left(d^+\middle|q,d^+,D_q^-\right) = \frac{exp(f(q,d^+)/\tau)}{exp(f(q,d^+)/\tau) + \sum_{d^-\in D_q^-} exp(f(q,d^-)/\tau)}$$

where q is the semantic vector of the first query text, $d^+$ is the semantic vector of the first retrieval text, $d^-$ is the semantic vector of the second retrieval text, $D_q^-$ is a semantic vector set to which the semantic vector of the second retrieval text belongs, $f(q, d^+)$ is the degree of relevance between the semantic vector of the first query text and the semantic vector of the first retrieval text, $f(q, d^-)$ is the degree of relevance between the semantic vector of the first query text and the semantic vector of the second retrieval text, and $\tau$ is a temperature parameter corresponding to the first information retrieval model.

According to a third aspect, an embodiment of this application provides an apparatus for training a semantic vector-based information retrieval model. The apparatus includes a processor. When the processor invokes a computer program in a memory, the method according to the first aspect is performed. In this way, the beneficial effects of the method provided in the first aspect can also be achieved.

According to a fourth aspect, an embodiment of this application provides an apparatus for training a semantic vector-based information retrieval model. The apparatus includes a processor and a memory, and the processor is coupled to the memory. The processor is configured to implement the method according to the first aspect. In this way, the beneficial effects of the method provided in the first aspect can also be achieved.

According to a fifth aspect, an embodiment of this application provides an apparatus for training a semantic vector-based information retrieval model. The apparatus includes a processor, a memory, and a transceiver, and the processor is coupled to the memory. The transceiver is configured to receive and send data. The processor is configured to implement the method according to the first aspect. In this way, the beneficial effects of the method provided in the first aspect can also be achieved.

According to a sixth aspect, an embodiment of this application provides an apparatus for training a semantic vector-based information retrieval model. The apparatus includes a processor and an interface. The interface is configured to receive or output a signal, and the processor is configured to implement the method according to the first aspect. In this way, the beneficial effects of the method provided in the first aspect can also be achieved.

According to a seventh aspect, an embodiment of this application provides a chip (or a set of chip systems). The chip (or the chip systems) includes (or include) a processor and a data interface. The processor reads, by using the data interface, instructions stored in a memory, to perform the method in the first aspect.

Optionally, in an implementation, the chip (or the chip systems) may further include a memory. The memory stores the instructions, and the processor is configured to execute the instructions stored in the memory. When the instructions are executed, the processor is configured to perform the method in the first aspect.

According to an eighth aspect, an embodiment of this application provides a computer-readable storage medium. The computer-readable storage medium stores instructions. When the instructions are run on a terminal, the terminal performs the method for training the semantic vector-based information retrieval model provided in the foregoing first aspect and/or any one of the possible implementations of the foregoing first aspect, and the beneficial effects of the method provided in the first aspect can also be achieved.

According to a ninth aspect, an embodiment of this application provides a computer program product including instructions. When the computer program product runs on a device, the device performs the method provided in the foregoing first aspect, and the beneficial effects of the method provided in the first aspect can be achieved.

According to a tenth aspect, a computer device is provided. The computer device includes the apparatus for training the semantic vector-based information retrieval model in any one of the foregoing second aspect to the foregoing sixth aspect.

**BRIEF DESCRIPTION OF DRAWINGS**

FIG. 1A is a diagram of an application scenario of information retrieval according to this application;
FIG. 1B is a diagram of another application scenario of information retrieval according to this application;
FIG. 1C is a diagram of still another application scenario of information retrieval according to this application;
FIG. 2 is a diagram of a system architecture according to this application;
FIG. 3 is a schematic flowchart of a method for training a semantic vector-based information retrieval model according to this application;
FIG. 4 is an operation diagram of obtaining training data in a first training data set according to this application;
FIG. 5 is a schematic flowchart of updating an information retrieval model according to this application;
FIG. 6 is a schematic flowchart of updating a model parameter of an encoder according to this application;
FIG. 7 is a diagram of a structure of an apparatus for training a semantic vector-based information retrieval model according to this application; and
FIG. 8 is a diagram of a structure of another apparatus for training a semantic vector-based information retrieval model according to this application.

**DESCRIPTION OF EMBODIMENTS**

The following clearly and completely describes the technical solutions in embodiments of this application with reference to the accompanying drawings in embodiments of this application.

A method for training a semantic vector-based information retrieval model provided in embodiments of this application can be applied to an intelligent question-answering scenario, a natural language processing scenario, and a scenario in which information retrieval (or analysis) needs to be performed, or applied to a human-computer interaction scenario, information retrieval scenario, information recommendation scenario, information matching scenario, and a scenario in which information management needs to be performed. Specifically, the method for training the semantic vector-based information retrieval model in embodiments of this application can be applied to the information retrieval scenario. The following briefly describes the information retrieval scenario.

As the name implies, information retrieval is finding, from a large quantity of information, information that satisfies user requirements. For example, a user inputs a query text (query) via user equipment, and a data processing device analyzes the query text, retrieves, from a database that is communicatively connected to the data processing device, a retrieval text that matches the query text, and outputs the retrieval text to the user equipment.

For ease of understanding the information retrieval scenario mentioned in this application, this application provides diagrams of several application scenarios of information retrieval in the following descriptions.

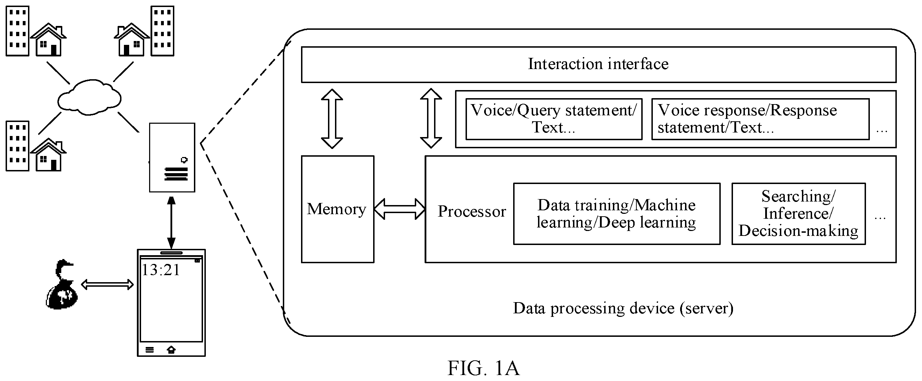

FIG. 1A is a diagram of an application scenario of information retrieval according to this application. An information retrieval system includes user equipment and a data processing device. The user equipment includes an intelligent terminal, for example, a mobile phone, a personal computer, or an information processing center. The user equipment is an initiator of the information retrieval, and serves as an initiator of a request, for example, language question and answering, retrieval, or query. Generally, the user initiates the request via the user equipment. The data processing device may be a device or a server with a data processing function, for example, a cloud server, a network server, an application server, or a management server. The data processing device receives, through an interaction interface, a question of a query statement/voice/text, or the like from a smart terminal, and then performs, by using a memory storing data and a processor processing data, language data processing in a manner of machine learning, deep learning, searching, inference, decision-making, or the like. The memory may be a general name, and includes local storage and a database storing historical data. The database may be in the data processing device, or may be in another network server.

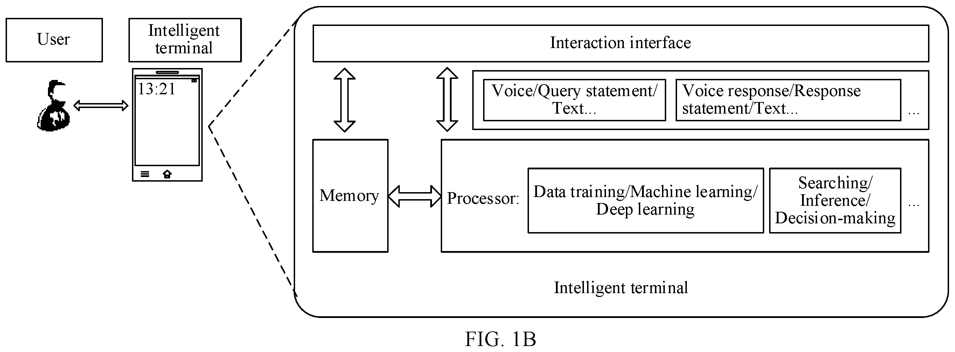

FIG. 1B is a diagram of another application scenario of information retrieval according to this application. An information retrieval system includes an intelligent terminal (or referred to as user equipment). The intelligent terminal may be directly used as a data processing device, in other words, the intelligent terminal may directly receive an input from a user, and hardware of the intelligent terminal may directly perform language data processing. A specific process is similar to that in FIG. 1A. For details, refer to the foregoing descriptions. The details are not described herein again.

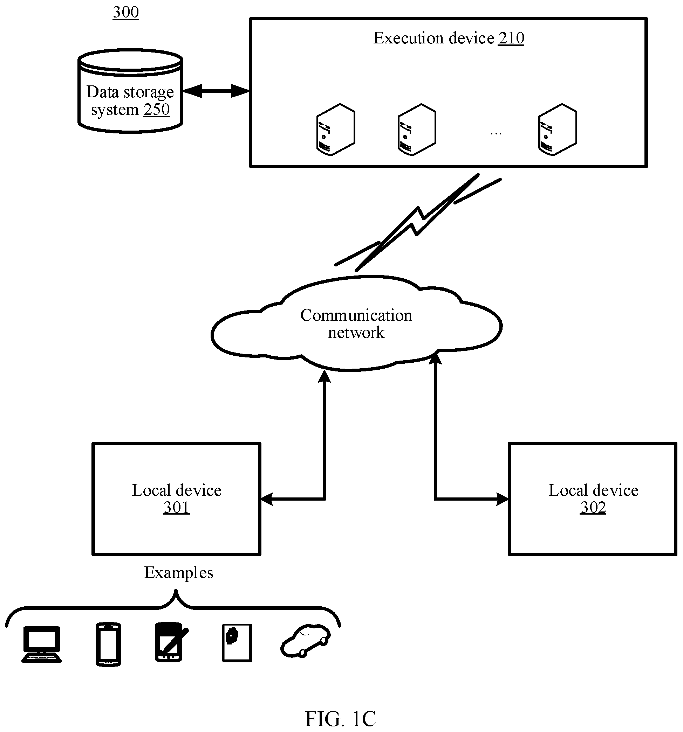

FIG. 1C is a diagram of still another application scenario of information retrieval according to this application. An information retrieval system includes local devices (for example, a local device 301 and a local device 302 in FIG. 1C), execution devices 210, and a data storage system 250. It may be understood that the data storage system 250 may be integrated into the execution device 210, or may be disposed in a cloud or another network server. The local device in FIG. 1C may be understood as the user equipment in FIG. 1A, and the execution device 210 may be understood as the data processing device in FIG. 1A. A specific information retrieval process is similar to that in FIG. 1A. For details, refer to the foregoing descriptions. The details are not described herein again.

It may be understood that, in the information retrieval scenario, accuracy (or understood as performance) of the information retrieval model may directly affect whether an output retrieval text satisfies user requirements. According to the method for training the semantic vector-based information retrieval model provided in this application, the performance of the information retrieval model can be improved. To better understand the solutions provided in this application, the following first describes a system architecture in this application.

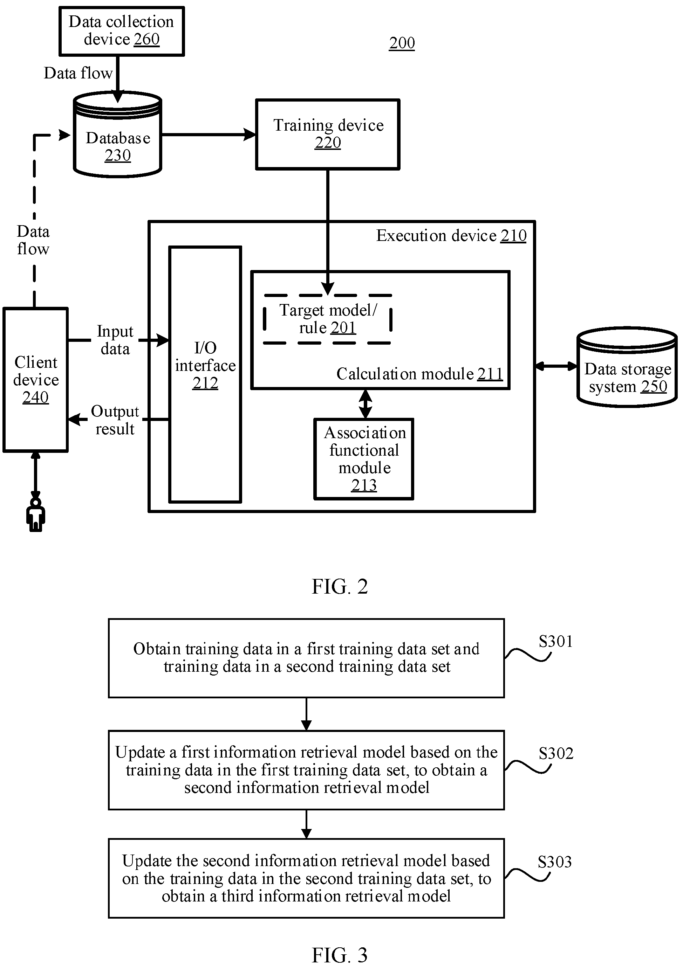

FIG. 2 shows a system architecture 200 according to this application. As shown in the system architecture 200, a data collection device 260 is configured to: collect training data, where training data in embodiments of this application includes question and answering (question and answering, QA) data (to be specific, a question text and an answer text), a query text, a retrieval text that corresponds to the query text and that is clicked by a user (which may be understood as retrieval text adopted, accepted, or viewed by the user), a retrieval text that corresponds to the query text and that has not been clicked by the user (which may be understood as retrieval text that is not adopted, accepted, or viewed by the user), and the like; and store the training data into a database 230. A training device 220 obtains a target model/rule 201 through training based on the training data maintained in the database 230. The target model/rule 201 may be used to implement the information retrieval method provided in embodiments of this application. To be specific, the user inputs a query requirement (for example, the query text) into the target model/rule 201, to obtain a retrieval text (or understood as a recommendation text) that satisfies the query requirement. The target model/rule 201 in embodiments of this application may be specifically an information retrieval model (or an information retrieval network). In embodiments provided in this application, the information retrieval model may be obtained by training one or a combination or a variant of a neural network (neural network, NN), a convolutional neural network (convolutional neuron network, CNN), a recurrent neural network (recurrent neural network, RNN), or a generative adversarial network (generative adversarial network, GAN).

It should be noted that, in actual application, the training data maintained in the database 230 is not necessarily all collected by the data collection device 260, and some training data may be received from another device. In addition, it should be noted that the training device 220 may not train the target model/rule 201 entirely based on the training data maintained in the database 230, or may obtain training data from a cloud or another place to perform model training. The foregoing descriptions should not be construed as any limitation to embodiments of this application.

FIG. 2 is a diagram of functional modules in a data processing process. Corresponding to the actual application scenario diagrams in FIG. 1A to FIG. 1C, a client device 240 may be the user equipment in FIG. 1A to FIG. 1C. When the user equipment in FIG. 1A to FIG. 1C has a strong data processing capability, an execution device 210 and a data storage system 250 may be integrated into the user equipment. In some embodiments, the execution device 210 and the data storage system 250 may alternatively be integrated into the data processing device in FIG. 1A to FIG. 1C. The database 230, the training device 220, and the data collection device 260 may be correspondingly integrated into the data processing device in FIG. 1A to FIG. 1C, and may be disposed in a cloud or another server in a network.

In a possible implementation, the data collection device 260 in FIG. 2 may be user equipment, or may be an input/output interface of the foregoing server or cloud, or an interaction layer (interface) configured to obtain query text (or referred to as a query statement) and return retrieval text (or referred to as an answering statement).

The target model/rule 201 obtained by the training device 220 through training may be used in different systems or devices, for example, used in the execution device 210 shown in FIG. 2. In FIG. 2, an I/O interface 212 is configured for the execution device 210, and is configured to exchange data with an external device. The user may input data (for example, the query text in this application) into the I/O interface 212 via the client device 240.

An association functional module 213 is configured to perform preprocessing based on input data (for example, the query text) received by the I/O interface 212. In embodiments of this application, the association functional module 213 includes but is not limited to one or more types of processing such as text segmentation, basic error correction, blank removal, case format unification, punctuation removal, stop word removal, and special character reservation on the query text.

In a process in which the execution device 210 performs preprocessing on the input data by using the association functional module 213, or a calculation module 211 of the execution device 210 performs related processing like computing, the execution device 210 may invoke data, code, and the like in the data storage system 250 for corresponding processing; and may also store, in the data storage system 250, data, instructions, and the like that are obtained through corresponding processing.

Finally, the I/O interface 212 returns a processing result, for example, the foregoing obtained retrieval text, to the client device 240, to provide the processing result for the user.

It should be noted that the training device 220 may generate corresponding target models/rules 201 for different targets and based on different data, so as to provide a better result for the user.

In the case shown in FIG. 2, the user may manually specify data to be input into the execution device 210, for example, operate in an interface provided by the I/O interface 212. In another case, the client device 240 may automatically input data into the I/O interface 212 and obtain a result. If the client device 240 needs to obtain authorization from the user to automatically input the data, the user may set corresponding permission in the client device 240. The user may view, on the client device 240, a result output by the execution device 210. A specific presentation form may be a specific manner such as displaying, a sound, or an action. The client device 240 may also serve as a data collection end to store collected query text and retrieval text in the database 230.

It should be noted that, FIG. 2 is merely a diagram of a system architecture according to an embodiment of the present invention. A position relationship between devices, components, modules, and the like shown in the figure does not constitute any limitation. For example, in FIG. 2, the data storage system 250 is an external memory relative to the execution device 210, and in another case, the data storage system 250 may alternatively be disposed in the execution device 210.

For ease of understanding, the following further describes related terms/concepts in embodiments of this application.

1. Word vector and semantic vector

A word embedding (word embedding) technology is a general term for language modeling and feature learning technologies in natural language processing (natural language processing, NLP). Based on the word embedding technology, a word/phrase from a vocabulary may be mapped to vector space of a real number, to obtain a vector representation of the word/phrase, that is, a word vector of the word/phrase. It should be noted that the word embedding technology mentioned in this application includes but is not limited to a word vector (Word2Vec) algorithm, a global word vector (Global Vectors for Word Representation, GloVe) algorithm, or the like.

The semantic vector mentioned in this application may be understood as a vector of a text including a plurality of words/phrases (or referred to as text).

2. Loss function

In a training process, as an output of an information retrieval model is expected to be as close as possible to a target expected value, a current output value corresponding to the information retrieval model may be compared with a target expected value, and then a parameter of the information retrieval model is updated based on a difference between the output value and the target value. For example, if the output value corresponding to the information retrieval model is high, a weight vector is adjusted to lower the output value. This process is repeated until an output value corresponding to the information retrieval model is equal to or very close to the target expected value. In this case, "how to perform gap comparison between the output value and the target value" needs to be predefined. This is the loss function (loss function) or an objective function (objective function), which is an important equation for measuring the gap between the output value and the target value. The loss function is used as an example. A higher output value (loss) of the loss function indicates a larger gap. In this case, training of the information retrieval model becomes a process of reducing the loss as much as possible.

3. Dual-tower model (Dual-Encoder)

Dual-tower model, also referred to as a dual-encoder neural network model, refers to separately using different encoders to encode query texts and retrieval texts independently, where outputs of the encoders are semantic vectors of the query texts and semantic vectors of the retrieval texts. Further, a degree of relevance between the semantic vector of the query text and the semantic vector of the retrieval text is calculated, and all the retrieval texts are sorted based on a degree of relevance between each retrieval text and the query text. The degree of relevance may be understood as a similarity between two semantic vectors, and the similarity may be calculated by using a method, for example, a cosine similarity calculation method or a vector dot product method. Alternatively, the degree of relevance may be understood as a vector distance between two semantic vectors, and the vector distance may be any one of a Euclidean distance, a vector distance calculated based on a cosine similarity, a vector distance calculated based on a dot-matrix, or the like.

During the training of an information retrieval model, a substantial amount of high-quality training data is essential for improving its performance. In the training process, if the high-quality training data is insufficient, performance of the information retrieval model may be adversely affected. To resolve the problem that performance of an obtained information retrieval model is poor in the case of insufficient high-quality training data, this application provides a method for training a semantic vector-based information retrieval model, so that the information retrieval model can lessen the need for a large amount of high-quality training data in the training process, thereby helping improve the performance of the obtained information retrieval model when the amount of high-quality training data is small.

The following describes in detail the technical solutions in this application with reference to FIG. 3. FIG. 3 is a schematic flowchart of a method for training a semantic vector-based information retrieval model according to an embodiment of this application. It may be understood that the method for training the semantic vector-based information retrieval model provided in this application may be performed by a terminal device, a chip in a terminal device, a chip in a server, or the like. This is not limited herein. For ease of description, the terminal device is used as an example for description in the following embodiment of this application. As shown in FIG. 3, the method for training the semantic vector-based information retrieval model may include the following steps.

S301: Obtain training data in a first training data set and training data in a second training data set.

The first training data is any piece of training data in the first training data set, and the first training data includes a first query text, a first retrieval text corresponding to the first query text and having a positive label, and a second retrieval text corresponding to the first query text and having a negative label. The second training data is any piece of training data in the second training data set, and the second training data includes a second query text, a third retrieval text that corresponds to the second query text, and an annotation of a degree of relevance (also referred to as a relevance degree, relevance, a similarity, or the like) between the second query text and the third retrieval text.

Manners in which the terminal device obtains training data in a training data set (including the first training data set or the second training data set) include but are not limited to one or more of the following manners. Manner 1: The terminal device obtains the training data in the training data set from a memory of the terminal device. Manner 2: The terminal device obtains the training data in the training data set from a database for which the terminal device has access permission. Manner 3: The terminal device collects training data from a data collection device (for functions of the data collection device, refer to the descriptions of the data collection device 260 in FIG. 2) that is communicatively connected to the terminal device, to form the training data set.

It should be noted that, in this application, a manner in which the terminal device obtains the training data in the first training data set may be the same as or different from a manner in which the terminal device obtains the training data in the second training data set. This is not specifically limited in this application. An obtaining source of the first training data set may be the same as or different from an obtaining source of the second training data set. This is not specifically limited in this application. A degree of relevance between two texts mentioned in this application may be understood as a vector distance between semantic vectors corresponding to the two texts. A shorter vector distance may be understood as a higher degree of relevance, and a longer vector distance may be understood as a lower degree of relevance. The vector distance may be any one of a Euclidean distance, a vector distance calculated based on a cosine similarity, a vector distance calculated based on a dot-matrix, or the like. Alternatively, a degree of relevance between two texts mentioned in this application may be understood as a similarity between semantic vectors corresponding to the two texts. The similarity may be calculated by using a method, for example, a cosine similarity calculation method or a vector dot product method.

For example, refer to a database 1 shown in Table 1. The database 1 stores the first training data set and the second training data set. The first training data set includes M pieces of training data, and the second training data set includes N pieces of training data. Both M and N are positive integers greater than 1, and M and N may be equal or may not be equal. This is not limited in this application. Any piece of training data in the first training data set includes a query text $q$, a retrieval text $d^+$ that corresponds to the query text $q$ and that has a positive label, and a retrieval text $d^-$ that corresponds to the query text and that has a negative label. For example, training data $0_1$ in the first training data set in Table 1 includes a query text $q_0$, a retrieval text $d_{00}^+$ that corresponds to the query text $q_0$ and that has a positive label, and i (a positive integer greater than 1) retrieval texts $d_{01}^-$ to $d_{0i}^-$ that correspond to the query text and that have a negative label. Any piece of training data in the second training data set includes a query text q', a retrieval text d' that corresponds to the query text q', and a score score (or understood as a label) of a degree of relevance between the query text q' and the retrieval text d'. For example, training data $0_2$ in the second training data set in Table 1 includes a query text $q_0'$, a retrieval text $d_0'$ corresponding to the query text $q_0'$, and a score 0 of a degree of relevance between the query text $q_0'$ and the retrieval text $d_0'$.

Table 1

| Database 1 | | | |
|---|---|---|---|
| First training data set | | Second training data set | |
| Training data $0_1$ | $q_0$, $d_{00}^+$, $d_{01}^-$ to $d_{0i}^-$ | Training data $0_2$ | $q_0'$, $d_0'$ , score 0 |
| Training data $1_1$ | $q_1$, $d_{10}^+$, $d_{11}^-$ to $d_{1i}^-$ | Training data $1_2$ | $q_1'$, $d_1'$ , score 1 |
| ... ... | ...... | ... ... | ...... |
| Training data $M_1$ | $q_M$, $d_{M0}^+$, $d_{M1}^-$ to $d_{Mi}^-$ | Training data $N_2$ | $q_N'$, $d_N'$ , score N |

In this case, if having access permission for the database 1, the terminal device may obtain the training data in the first training data set and the training data in the second training data set from the database 1.

In a possible implementation, a manner in which the terminal device obtains the first training data set may be obtaining a plurality of pieces of training data from at least one data source (or understood as a database), and then processing the plurality of pieces of training data, to obtain the training data in the first training data set. For ease of understanding, the following using, as an example for description, obtaining any piece of training data in the first training data set, and in the following descriptions, the first training data (including the first query text, the first retrieval text, and the second retrieval text) is a representative of any piece of training data in the first training data set. The terminal device obtains, from a database, the first query text, a fourth retrieval text that corresponds to the first query text and that is clicked, and a fifth retrieval text that corresponds to the first query text and that has not been clicked; and determines a degree of relevance between the first query text and the fourth retrieval text and a degree of relevance between the first query text and the fifth retrieval text. Further, the terminal device determines the first retrieval text from the fourth retrieval text, where the first retrieval text is a retrieval text whose degree of relevance to the first query text is greater than or equal to a first threshold; and determines the second retrieval text from the fifth retrieval text, where the second retrieval text is a retrieval text whose degree of relevance to the first query text is less than or equal to a second threshold and whose degree of relevance to the first query text is greater than or equal to a third threshold.

Specific values of the first threshold, the second threshold, and the third threshold may be set based on specific application scenarios. This is not specifically limited in this application. It may be understood as that, when the degree of relevance between the fourth retrieval text and the query text is less than the first threshold, the fourth retrieval text is a retrieval text that should have a negative label but is mistakenly clicked by a user. When the degree of relevance between the fifth retrieval text and the query text is greater than the second threshold, the fifth retrieval text may be a retrieval text that should have a positive label but is not clicked by the user. When the degree of relevance between the fifth retrieval text and the query text is less than the third threshold, the fifth retrieval text may be a retrieval text uncorrelated with the query text.

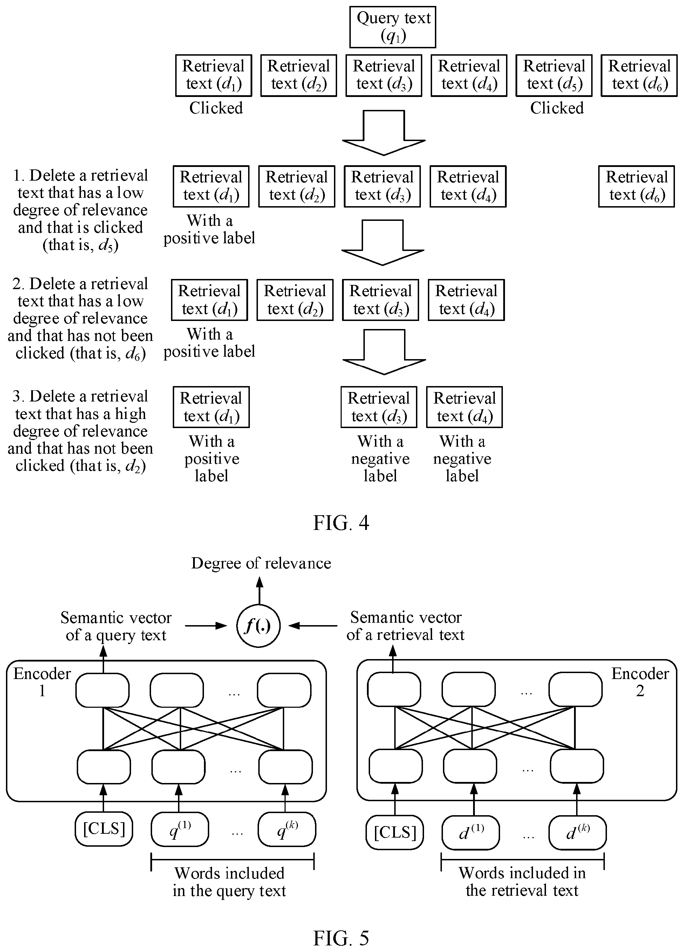

For example, refer to FIG. 4. The terminal device obtains a query text $q_1$ and a plurality of retrieval texts $d_1$ to $d_6$. The retrieval text $d1$ and the retrieval text $d_5$ are retrieval texts that are clicked by the user, and the retrieval text $d_2$, the retrieval text $d_3$, the retrieval text $d_4$, and the retrieval text $d_5$ are retrieval texts that have not been clicked by the user. The terminal device calculates a degree of relevance between the query text $q_1$ and each retrieval text, and a calculation result is shown in Table 2.

Table 2

| Query text identifier | Retrieval text identifier | Degree of relevance |
|---|---|---|
| Query text $q_1$ | Retrieval text $d_1$ (clicked) | A degree of relevance is $score_{11}$ |
| | Retrieval text $d_2$ | A degree of relevance is $score_{12}$ |
| | Retrieval text $d_3$ | A degree of relevance is $score_{13}$ |
| | Retrieval text $d_4$ | A degree of relevance is $score_{14}$ |
| | Retrieval text $d_5$ (clicked) | A degree of relevance is $score_{15}$ |
| | Retrieval text $d_6$ | A degree of relevance is $score_{16}$ |

The clicked retrieval text may be mistakenly clicked, to remove a mistakenly clicked retrieval text to improve quality of the first training data set, the terminal device obtains the first threshold, compares a degree of relevance between each retrieval text that is clicked (denoted as the fourth retrieval text) and the query text $q_1$ with the first threshold, and deletes a fourth retrieval text whose degree of relevance is less than the first threshold. For example, in Table 2, if $score_{11}$ is greater than or equal to the first threshold, and $score_{15}$ is less than the first threshold, as shown in FIG. 4, the terminal device labels the retrieval text $d_1$ with a positive label, and deletes the retrieval text $d_5$. To improve a capability of the retrieval model to distinguish a retrieval text with a positive label from a retrieval text with a negative label, the terminal device selects, from a plurality of retrieval texts (denoted as fifth retrieval texts) that have not been clicked, a retrieval text that can be labeled with a negative label. The terminal device obtains the second threshold and the third threshold, first compares a degree of relevance between each retrieval text that is not clicked and the query text $q_1$ with the third threshold, and deletes a fifth retrieval text whose degree of relevance is less than the third threshold, then compares the degree of relevance between each retrieval text that is not clicked and the query text $q_1$ with the second threshold, and deletes a fifth retrieval text whose degree of relevance is greater than the second threshold. For example, in Table 2, if $score_{12}$ is greater than the second threshold, $score_{13}$ and $score_{14}$ are both less than or equal to the second threshold and greater than or equal to the third threshold, and $score_{16}$ is less than the third threshold, as shown in FIG. 4, the terminal device deletes the retrieval text $d_2$ and the retrieval text $d_6$, and labels the retrieval text $d_3$ and the retrieval text $d_4$ with a negative label.

In other words, after obtaining, from a database, the first query text and a plurality of retrieval texts (including the fourth retrieval text clicked by the user and the fifth retrieval text not clicked by the user) corresponding to the first query text, the terminal device determines, as the first retrieval text, a fourth retrieval text whose degree of relevance to the first query text is greater than or equal to the first threshold (that is, labels the fourth retrieval text with a positive label), and determines, as the second retrieval text, a fifth retrieval text whose degree of relevance to the first query text is greater than or equal to the third threshold and less than or equal to the second threshold (that is, labels the fifth retrieval text with a negative label).

In a possible implementation of determining the first threshold, the terminal device obtains a random text database including a plurality of random texts, calculates a degree of relevance between the first query text and each random text, further sorts all random texts in the random text database in descending order of degrees of relevance, and determines a degree of relevance between a $k^{th}$ sorted random text and the first query text as the first threshold. In a possible implementation of determining the third threshold, the terminal device determines degrees of relevance between the first query text and all fifth retrieval texts, sorts all the fifth retrieval texts in descending order of degrees of relevance, and determines a degree of relevance between an $n^{th}$ fifth retrieval text and the first query text as the third threshold. Specific values of k and n may be set based on specific application scenarios. This is not specifically limited in this application.

In a possible implementation, after the terminal device obtains the plurality of pieces of training data from the at least one database, the plurality of pieces of training data may include training data whose query texts are repeated or whose retrieval texts are repeated. In this case, after performing data deduplication processing on the plurality of pieces of training data, the terminal device may process deduplicated training data with reference to the processing process shown in FIG. 4, to obtain the training data in the first training data set.

For example, the terminal device obtains training data 1 to training data 5, and performs exact string matching processing, fuzzy matching processing, and the like on a query text and a retrieval text included in each one of the training data 1 to the training data 5, to determine that the training data 1 and the training data 2 include a same query text, and the training data 3 and the training data 4 include a same retrieval text. In this case, the terminal device performs data deduplication processing on the training data 1 to the training data 5, to obtain deduplicated training data: the training data 1, the training data 3, and the training data 5. Further, a retrieval text included in the deduplicated training data is processed with reference to the processing procedure provided in FIG. 4.

S302: Update a first information retrieval model based on the training data in the first training data set, to obtain a second information retrieval model.

The terminal device updates the first information retrieval model based on each piece of training data in the first training data set, to obtain the second information retrieval model. An example in which the first information retrieval model is updated based on the first training data (that is, a representative of any piece of training data in the first training data set) is used for description. The terminal device inputs, into the first information retrieval model, the first query text, the first retrieval text, and the second retrieval text that are included in the first training data, and the first information retrieval model outputs the degree of relevance between the first query text and the first retrieval text (or may be understood as a degree of relevance between a semantic vector of the first query text and a semantic vector of the first retrieval text), and a degree of relevance between the first query text and each second retrieval text (or may be understood as a degree of relevance between the semantic vector of the first query text and a semantic vector of the second retrieval text). For example, the first information retrieval model is a two-tower model. Refer to FIG. 5. The terminal device inputs the first query text, the first retrieval text, and the second retrieval text into the first information retrieval model. The first information retrieval model obtains, via an encoder 1, the semantic vector of the first query text, separately obtains, via an encoder 2, the semantic vector of the first retrieval text and the semantic vector of the second retrieval text, and calculates the degree of relevance between the semantic vector of the first query text and the semantic vector of the first retrieval text and the degree of relevance between the semantic vector of the first query text and the semantic vector of the second retrieval text. Further, the terminal device updates a model parameter of the first information retrieval model based on the degree of relevance between the first query text and the first retrieval text, the degree of relevance between the first query text and each second retrieval text, and a loss function of the first information retrieval model.

In a possible implementation, the loss function of the first information retrieval model is set based on the degree of relevance between the semantic vector of the first query text and the semantic vector of the first retrieval text and the degree of relevance between the semantic vector of the first query text and the semantic vector of the second retrieval text. In a specific example, the loss function of the first information retrieval model satisfies a condition shown in Formula (1).

$$P\left(d^+ \middle| q, d^+, D_q^-\right) = \frac{exp(f(q,d^+)/\tau)}{exp(f(q,d^+)/\tau) + \sum_{d^- \in D_q^-} exp(f(q,d^-)/\tau)} \quad (1)$$

where P(.) is the loss function of the first information retrieval model, q is the semantic vector of the first query text, $d^+$ is the semantic vector of the first retrieval text, $d^-$ is the semantic vector of the second retrieval text, $D_q^-$ is a semantic vector set to which the semantic vector of the second retrieval text belongs, $f(q, d^+)$ is the degree of relevance between the semantic vector of the first query text and the semantic vector of the first retrieval text, $f(q, d^-)$ is the degree of relevance between the semantic vector of the first query text and the semantic vector of the second retrieval text, and $\tau$ is a temperature parameter (temperature parameter) corresponding to the first information retrieval model.

In a possible implementation, the first information retrieval model includes an encoder. Before updating the first information retrieval model based on the training data in the first training data set to obtain the second information retrieval model, training text in a third training data set is obtained; and the training text of the third training data set is input into the encoder, to obtain a first semantic vector corresponding to the training text, where the first semantic vector is generated based on a word vector of a word included in the training text and a positional vector of the word. Further, the training text of the third training data set and the first semantic vector are input into a decoder, to obtain a second semantic vector, where the second semantic vector is generated based on the first semantic vector, the word vector of the word included in the training text, and the positional vector of the word. Text reconstruction is performed based on the second semantic vector, to obtain a reconstructed text; and a model parameter of the encoder is updated based on the reconstructed text and the training text. By implementing this possible implementation, a capability of the encoder of the first information retrieval model to represent a semantic vector of a text can be optimized.

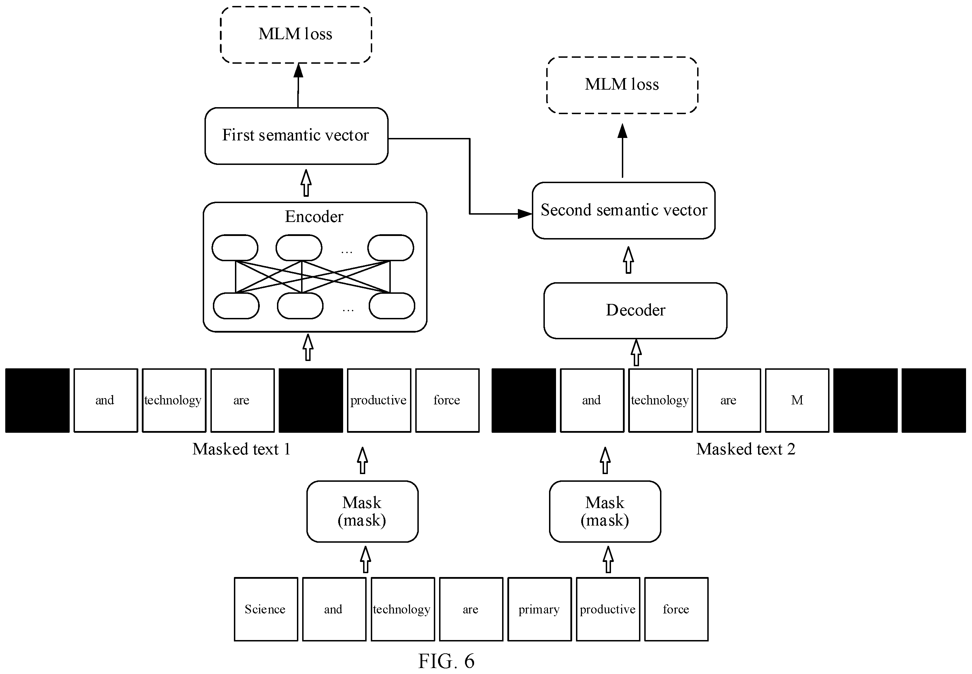

For example, refer to FIG. 6. A training text "Science and technology are primary productive forces" is randomly masked, to obtain a masked text 1 and a masked text 2. The masked text 1 is input into an encoder, to obtain a semantic vector of the masked text 1 (that is, the foregoing first semantic vector), and the masked text 2 and the semantic vector of the masked text 1 are input into a decoder, to obtain a second semantic vector. The second semantic vector satisfies a condition shown in Formula (2).

$$[h_{\bar{X}}, e_{x_1} + p_1, \dots, e_{x_i} + p_i, \dots, e_{x_N} + p_N] \rightarrow H_{\bar{X}_{dec}} \quad (2)$$

where $h_{\bar{X}}$ is the semantic vector of the masked text 1 (that is, the foregoing first semantic vector), N is a quantity of words included in the training text, $e_{x_i}$ is a word vector of an $i^{th}$ word, $p_i$ is a positional vector of the $i^{th}$ word, and $H_{\bar{X}_{dec}}$ is the second semantic vector.

Further, text reconstruction is performed based on the second semantic vector, to obtain a reconstructed text; and a model parameter of the encoder is updated based on the reconstructed text and the training text. It should be understood that, in FIG. 6, a process of randomly masking the training text to obtain the masked text 1 and the masked text 2, and then obtaining the first semantic vector based on the masked text 1 is performed using masked language modeling (masked language modeling, MLM). For the MLM, a model parameter may be updated based on an MLM loss function (loss).

S303: Update the second information retrieval model based on the training data in the second training data set, to obtain a third information retrieval model.

The terminal device updates the second information retrieval model based on each piece of training data in the second training data set, to obtain the third information retrieval model. Then, the third information retrieval model may receive a third query text (namely, a query text that is input into the third information retrieval model), determine a semantic vector of the third query text, and output an information retrieval result (or understood as an information retrieval text corresponding to the third query text) based on the semantic vector of the third query text.

The following uses, as an example for description, updating the second information retrieval model based on the second training data (that is, a representative of any piece of training data in the second training data set). The terminal device inputs the second query text and the third retrieval text into the second information retrieval model, and the second information retrieval model outputs the degree of relevance between the second query text and the third retrieval text (or may be understood as a degree of relevance between a semantic vector of the second query text and a semantic vector of the third retrieval text). For example, the second information retrieval model is a two-tower model. Refer to FIG. 5. The terminal device inputs the second query text and the third retrieval text into the second information retrieval model. The second information retrieval model obtains, via the encoder 1, the semantic vector of the second query text, separately obtains, via the encoder 2, the semantic vector of the third retrieval text, and calculates the degree of relevance between the semantic vector of the second query text and the semantic vector of the third retrieval text. Further, the terminal device updates a model parameter of the second information retrieval model based on the degree of relevance between the semantic vector of the second query text and the semantic vector of the third retrieval text, an annotation of the degree of relevance between the second query text and the third retrieval text, and a loss function of the second information retrieval model.

In a possible implementation, the loss function of the second information retrieval model is set based on the degree of relevance between the semantic vector of the second query text and the semantic vector of the third retrieval text and the annotation of the degree of relevance between the second query text and the third retrieval text.

In the implementation shown in FIG. 3, when an amount of high-quality training data (namely, the training data in the second training data set mentioned in this application or the second training data mentioned in this application) is small, the information retrieval model may be first trained based on training data whose quality is slightly lower than that of the high-quality training data (for example, training data that is not annotated with a degree of relevance between a query text and a retrieval text, that is, the training data in the first training data set mentioned in this application), to increase a scale of training data; and then the information retrieval model is trained based on the high-quality training data, to improve quality of representing a semantic vector by the information retrieval model, thereby helping improve overall performance of the information retrieval model.

The following describes an apparatus for training a semantic vector-based information retrieval model in this application.

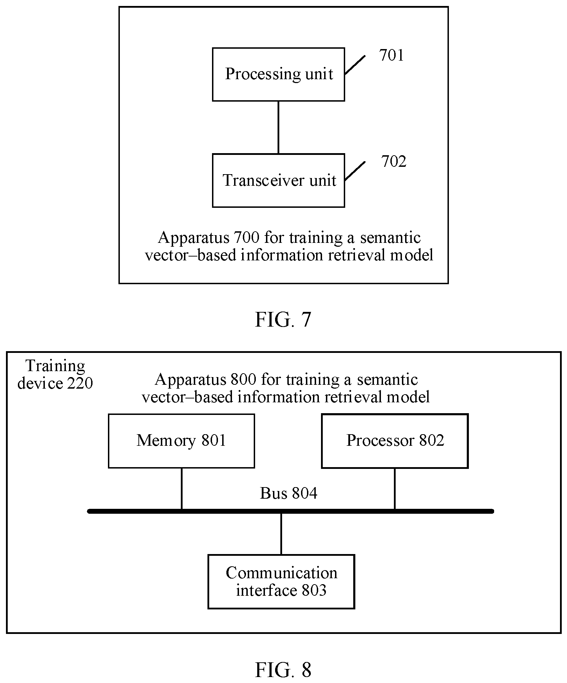

When an integrated unit is used, referring to FIG. 7, FIG. 7 is a diagram of a structure of an apparatus for training a semantic vector-based information retrieval model according to an embodiment of this application. The apparatus 700 for training the semantic vector-based information retrieval model in FIG. 7 is the training device 220 in FIG. 2, and may be a terminal device, a chip in a terminal device, a server (including but not limited to a cloud server), a chip in a server, or the like. This is not limited herein. As shown in FIG. 7, the apparatus 700 for training the semantic vector-based information retrieval model includes a processing unit 701 and a transceiver unit 702. The transceiver unit 702 may be a transceiver or a communication interface, and the processing unit 701 may be one or more processors. The apparatus for training the semantic vector-based information retrieval model may be configured to implement functions of the terminal device, the chip, or the server in the foregoing method embodiments.

For example, the apparatus for training the semantic vector-based information retrieval model may be the terminal device. The terminal device may be a network element in a hardware device, a software function running on dedicated hardware, or a virtualized function instantiated on a platform (for example, a cloud platform). Optionally, the apparatus for training the semantic vector-based information retrieval model may further include a storage unit (not shown in the figure), configured to store program code and data of a semantic understanding apparatus.

For example, when the apparatus for training the semantic vector-based information retrieval model is the chip, the transceiver unit 702 may be an interface, a pin, a circuit, or the like. The interface may be configured to input to-be-processed data to a processor, and may output a processing result of the processor to the outside. During specific implementation, the interface may be a general-purpose input output (general-purpose input output, GPIO) interface, and may be connected to a plurality of peripheral devices (for example, a display (LCD), a camera (camera), a radio frequency (radio frequency, RF) module, and an antenna). The interface is connected to the processor through a bus.

The processing unit 701 may be a processor, and the processor may execute computer-executable instructions stored in a storage unit, so that the chip performs the method in FIG. 3.

Further, the processor may include a controller, an arithmetic logic unit, and a register. For example, the controller is mainly responsible for instruction decoding, and transmitting a control signal for an operation corresponding to the instructions. The arithmetic logic unit is mainly responsible for performing a fixed-point or floating-point arithmetic operation, a shift operation, a logic operation, and the like, and may also perform address arithmetic and address translation. The register is mainly responsible for saving a quantity of register operations, intermediate operation results, and the like that are temporarily stored during instruction execution. During specific implementation, a hardware architecture of the processor may be an application-specific integrated circuit (application-specific integrated circuit, ASIC) architecture, a microprocessor without interlocked piped stages architecture (microprocessor without interlocked piped stages architecture, MIPS), an advanced reduced instruction set computing machine (advanced RISC machine, ARM) architecture, a network processor (network processor, NP) architecture, or the like. The processor may be a single-core processor or a multi-core processor.

The storage unit may be a storage unit in the chip, for example, a register or a cache. The storage unit may alternatively be a storage unit located outside the chip, for example, a read-only memory (Read-Only Memory, ROM), another type of static storage device that can store static information and instructions, or a random access memory (Random Access Memory, RAM).

It should be noted that functions separately corresponding to the processor and the interface may be implemented by using a hardware design, may be implemented by using a software design, or may be implemented by using a combination of software and hardware. This is not limited herein.

Specifically, in a design, the apparatus for training the semantic vector-based information retrieval model may be configured to process obtained text data. Details are as follows.

A transceiver unit 702 is configured to obtain training data in a first training data set and training data in a second training data set, where first training data is any piece of training data in the first training data set, and the first training data includes first query text, first retrieval text corresponding to the first query text and having a positive label, and second retrieval text corresponding to the first query text and having a negative label, and the second training data is any piece of training data in the second training data set, and the second training data includes second query text, third retrieval text that corresponds to the second query text, and an annotation of a degree of relevance between the second query text and the third retrieval text. A processing unit 701 is configured to update a first information retrieval model based on the training data in the first training data set, to obtain a second information retrieval model. The processing unit 701 is further configured to update the second information retrieval model based on the training data in the second training data set, to obtain a third information retrieval model, where the third information retrieval model is configured to: receive a third query text, determine a semantic vector of the third query text, and output an information retrieval result based on the semantic vector of the third query text.

For beneficial effects achieved by the apparatus provided in the second aspect, refer to the beneficial effects corresponding to the method provided in the foregoing first aspect. Details are not described herein again.

With reference to the second aspect, in a possible implementation, the transceiver unit 702 is further configured to obtain the first query text, fourth retrieval text that corresponds to the first query text and that is clicked, and fifth retrieval text that corresponds to the first query text and that has not been clicked. The processing unit 701 is further configured to determine a degree of relevance between the first query text and the fourth retrieval text and a degree of relevance between the first query text and the fifth retrieval text. The processing unit 701 is further configured to determine the foregoing first retrieval text from the fourth retrieval text, where the first retrieval text is a retrieval text whose degree of relevance to the first query text is greater than or equal to a first threshold. The processing unit 701 is further configured to determine the second retrieval text from the fifth retrieval text, where the second retrieval text is a retrieval text whose degree of relevance to the first query text is less than or equal to a second threshold and whose degree of relevance to the first query text is greater than or equal to a third threshold.

With reference to the second aspect, in a possible implementation, the first information retrieval model includes an encoder. In this case, the transceiver unit 702 is further configured to obtain training text of a third training data set. The processing unit 701 is further configured to input the training text of the third training data set into the encoder, to obtain a first semantic vector corresponding to the training text, where the first semantic vector is generated based on a word vector of a word included in the training text and a positional vector of the word. The processing unit 701 is further configured to input the training text of the third training data set and the first semantic vector into a decoder, to obtain a second semantic vector, where the second semantic vector is generated based on the first semantic vector, the word vector of the word included in the training text, and the positional vector of the word. The processing unit 701 is further configured to perform text reconstruction based on the second semantic vector, to obtain a reconstructed text. The processing unit 701 is further configured to update a model parameter of the encoder based on the reconstructed text and the training text.

With reference to the second aspect, in a possible implementation, a loss function of the first information retrieval model is set based on a degree of relevance between a semantic vector of the first query text and a semantic vector of the first retrieval text and a degree of relevance between the semantic vector of the first query text and a semantic vector of the second retrieval text.

With reference to the second aspect, in a possible implementation, the loss function of the first information retrieval model satisfies the following condition:

$$P\left(d^+|q,d^+,D_q^-\right) = \frac{exp(f(q,d^+)/\tau)}{exp(f(q,d^+)/\tau) + \sum_{d^-\in D_q^-} exp(f(q,d^-)/\tau)}$$

where q is the semantic vector of the first query text, $d^+$ is the semantic vector of the first retrieval text, $d^-$ is the semantic vector of the second retrieval text, $D_q^-$ is a semantic vector set to which the semantic vector of the second retrieval text belongs, $f(q, d^+)$ is the degree of relevance between the semantic vector of the first query text and the semantic vector of the first retrieval text, $f(q, d^-)$ is the degree of relevance between the semantic vector of the first query text and the semantic vector of the second retrieval text, and $\tau$ is a temperature parameter corresponding to the first information retrieval model.

It should be understood that the foregoing apparatus for training the semantic vector-based information retrieval model may correspondingly perform the steps in the foregoing method embodiments, and the foregoing operations or functions of various units in the apparatus for training the semantic vector-based information retrieval model are separately used to implement corresponding operations performed by the terminal device in the foregoing method embodiments. For corresponding beneficial effects, refer to method embodiments. For brevity, details are not described herein again.

The foregoing describes the apparatus for training the semantic vector-based information retrieval model in embodiments of this application. The following describes possible product forms of the apparatus for training the semantic vector-based information retrieval model. It should be understood that any product that has the function of the foregoing apparatus for training the semantic vector-based information retrieval model in FIG. 7 falls within the protection scope of embodiments of this application. It should be further understood that the following description is merely an example, and a product form of the apparatus for training the semantic vector-based information retrieval model in embodiments of this application is not limited thereto.

In a possible product form, referring to FIG. 8, FIG. 8 is a diagram of a hardware structure of another apparatus for training a semantic vector-based information retrieval model according to an embodiment of this application. The apparatus 800 (the apparatus 800 may be specifically a computer device) for training the semantic vector-based information retrieval model shown in FIG. 8 includes a memory 801, a processor 802, a communication interface 803, and a bus 804. The memory 801, the processor 802, and the communication interface 803 are communicatively connected to each other through the bus 804.

The memory 801 may be a read-only memory (Read-Only Memory, ROM), a static storage device, a dynamic storage device, or a random access memory (Random Access Memory, RAM). The memory 801 may store a program. When the program stored in the memory 801 is executed by the processor 802, the processor 802 and the communication interface 803 are configured to perform a function that needs to be performed by a unit in a segmentation network model training apparatus in embodiments of this application, or perform the method for training the semantic vector-based information retrieval model in method embodiments of this application.

The processor 802 may alternatively be an integrated circuit chip and has a signal processing capability. In an implementation process, steps in the method for training the semantic vector-based information retrieval model in this application may be completed by using a hardware integrated logic circuit in the processor 802, or by using instructions in a form of software. The foregoing processor 802 may alternatively be a general-purpose processor, a digital signal processor (Digital Signal Processing, DSP), an application-specific integrated circuit (ASIC), a field programmable gate array (Field Programmable Gate Array, FPGA) or another programmable logic device, a discrete gate or transistor logic device, or a discrete hardware component. The processor 802 may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 801. The processor 802 reads information in the memory 801, and completes, in combination with hardware of the processor 802, functions that need to be performed by units included in the apparatus for training the semantic vector-based information retrieval model in embodiments of this application, or performs the method for training the semantic vector-based information retrieval model in method embodiments of this application.

The communication interface 803 implements communication between the apparatus 800 and another device or a communication network by using a transceiver apparatus, for example, but not limited to, a transceiver. For example, training data (for example, the training data in the first training data set and the training data in the second training data set in S301 in this application) may be obtained through the communication interface 803.

The bus 804 may include a path for transferring information between components (for example, the memory 801, the processor 802, and the communication interface 803) of the apparatus 800.

It should be understood that the transceiver unit 702 in the apparatus 700 for training the semantic vector-based information retrieval model is equivalent to the communication interface 803 in the apparatus 800 for training the semantic vector-based information retrieval model, and the processing unit 701 in the apparatus 700 for training the semantic vector-based information retrieval model may be equivalent to the processor 802 in the apparatus 800 for training the semantic vector-based information retrieval model.

It should be understood that apparatuses for training the semantic vector-based information retrieval model in the foregoing product forms have any function of the terminal device in the foregoing method embodiments, can correspondingly implement the steps in the foregoing method embodiments, and achieve corresponding technical effects. For brevity, details are not described herein again.

It should be noted that although the apparatus 800 shown in FIG. 8 only shows the memory, the processor, and the communication interface, in a specific implementation process, a person skilled in the art should understand that the apparatus 800 further includes other components that are necessary to implement normal running. In addition, based on a specific requirement, a person skilled in the art should understand that the apparatus 800 may further include a hardware component for implementing another additional function. In addition, a person skilled in the art should understand that the apparatus 800 may also include only components required for implementing embodiments of this application, but not necessarily include all the components shown in FIG. 8.

It may be understood that the apparatus 800 is equivalent to the training device 220 in FIG. 2. A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatuses, and units, refer to a corresponding process in the foregoing method embodiments. Details are not described herein again.

In several embodiments provided in this application, it should be understood that the disclosed system, apparatus, and method may be implemented in other manners. For example, the foregoing described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for training a semantic vector-based information retrieval model, wherein the method comprises:

   obtaining training data in a first training data set and training data in a second training data set, wherein first training data is any piece of training data in the first training data set, and the first training data consists of a first query text, a first retrieval text corresponding to the first query text and having a positive label, and a second retrieval text corresponding to the first query text and having a negative label; and the second training data is any piece of training data in the second training data set, and the second training data consists of a second query text, a third retrieval text that corresponds to the second query text, and an annotation of a degree of relevance between the second query text and the third retrieval text;
   updating a first information retrieval model based on the training data in the first training data set, to obtain a second information retrieval model; and
   updating the second information retrieval model based on the training data in the second training data set, to obtain a third information retrieval model, wherein the third information retrieval model is configured to: receive a third query text, determine a semantic vector of the third query text, and output an information retrieval result based on the semantic vector of the third query text.

2. The method according to claim 1, wherein the obtaining the training data in the first training data set comprises:

obtaining the first query text, a fourth retrieval text that corresponds to the first query text and that is clicked, and a fifth retrieval text that corresponds to the first query text and that has not been clicked;

determining a degree of relevance between the first query text and the fourth retrieval text and a degree of relevance between the first query text and the fifth retrieval text;

determining the first retrieval text from the fourth retrieval text, wherein the first retrieval text is a retrieval text whose degree of relevance to the first query text is greater than or equal to a first threshold; and

determining the second retrieval text from the fifth retrieval text, wherein the second retrieval text is a retrieval text whose degree of relevance to the first query text is less than or equal to a second threshold and whose degree of relevance to the first query text is greater than or equal to a third threshold.

3. The method according to claim 1 or 2, wherein the first information retrieval model comprises an encoder, and before the updating the first information retrieval model based on the training data in the first training data set, to obtain the second information retrieval model, the method further comprises:

obtaining a training text of a third training data set;

inputting the training text of the third training data set into the encoder, to obtain a first semantic vector corresponding to the training text, wherein the first semantic vector is generated based on a word vector of a word comprised in the training text and a positional vector of the word;

inputting the training text of the third training data set and the first semantic vector into a decoder, to obtain a second semantic vector, wherein the second semantic vector is generated based on the first semantic vector, the word vector of the word comprised in the training text, and the positional vector of the word;

performing text reconstruction based on the second semantic vector, to obtain a reconstructed text; and

updating a model parameter of the encoder based on the reconstructed text and the training text.

4. The method according to any one of claims 1 to 3, wherein a loss function of the first information retrieval model is set based on a degree of relevance between a semantic vector of the first query text and a semantic vector of the first retrieval text and a degree of relevance between the semantic vector of the first query text and a semantic vector of the second retrieval text.

5. The method according to claim 4, wherein the loss function of the first information retrieval model satisfies the following condition:

$$P(d^+|q, d^+, D_q^-) = \frac{exp(f(q, d^+)/\tau)}{exp(f(q, d^+)/\tau) + \sum_{d^- \in D_q^-} exp(f(q, d^-)/\tau)}$$

wherein q is the semantic vector of the first query text, $d^+$ is the semantic vector of the first retrieval text, $d^-$ is the semantic vector of the second retrieval text, $D_q^-$ is a semantic vector set to which the semantic vector of the second retrieval text belongs, $f(q, d^+)$ is the degree of relevance between the semantic vector of the first query text and the semantic vector of the first retrieval text, $f(q, d^-)$ is the degree of relevance between the semantic vector of the first query text and the semantic vector of the second retrieval text, and $\tau$ is a temperature parameter corresponding to the first information retrieval model.

6. An apparatus for training a semantic vector-based information retrieval model, wherein the apparatus comprises:

a transceiver unit, configured to obtain a first training data set and the training data set, wherein

first training data is any piece of training data in the first training data set, and the first training data consists of a first query text, a first retrieval text corresponding to the first query text and having a positive label, and a second retrieval text corresponding to the first query text and having a negative label; and the second training data is any piece of training data in the second training data set, and the second training data consists of a second query text, a third retrieval text that corresponds to the second query text, and an annotation of a degree of relevance between the second query text and the third retrieval text; and

a processing unit, configured to update a first information retrieval model based on the training data in the first training data set, to obtain a second information retrieval model, wherein

the processing unit is further configured to update the second information retrieval model based on the training data in the second training data set, to obtain a third information retrieval model; and the third information retrieval model is configured to: receive a third query text, determine a semantic vector of the third query text, and output an information retrieval result based on the semantic vector of the third query text.

7. The apparatus according to claim 6, wherein

the transceiver unit is further configured to obtain the first query text, a fourth retrieval text that corresponds to the first query text and that is clicked, and a fifth retrieval text that corresponds to the first query text and that has not been clicked;

the processing unit is further configured to determine a degree of relevance between the first query text and the fourth retrieval text and a degree of relevance between the first query text and the fifth retrieval text;

the processing unit is further configured to determine the first retrieval text from the fourth retrieval text, wherein the first retrieval text is a retrieval text whose degree of relevance to the first query text is greater than or equal to a first threshold; and

the processing unit is further configured to determine the second retrieval text from the fifth retrieval text, wherein the second retrieval text is a retrieval text whose degree of relevance to the first query text is less than or equal to a second threshold and whose degree of relevance to the first query text is greater than or equal to a third threshold.

8. The apparatus according to claim 6 or 7, wherein the first information retrieval model comprises an encoder;

the transceiver unit is further configured to obtain a training text of a third training data set;

the processing unit is further configured to input the training text of the third training data set into the encoder, to obtain a first semantic vector corresponding to the training text, wherein the first semantic vector is generated based on a word vector of a word comprised in the training text and a positional vector of the word;

the processing unit is further configured to input the training text of the third training data set and the first semantic vector into a decoder, to obtain a second semantic vector, wherein the second semantic vector is generated based on the first semantic vector, the word vector of the word comprised in the training text, and the positional vector of the word;

the processing unit is further configured to perform text reconstruction based on the second semantic vector, to obtain a reconstructed text; and

the processing unit is further configured to update a model parameter of the encoder based on the reconstructed text and the training text.

9. The apparatus according to any one of claims 6 to 8, wherein a loss function of the first information retrieval model is set based on a degree of relevance between a semantic vector of the first query text and a semantic vector of the first retrieval text and a degree of relevance between the semantic vector of the first query text and a semantic vector of the second retrieval text.

10. The apparatus according to claim 9, wherein the loss function of the first information retrieval model satisfies the following condition:

$$P\left(d^+\middle|q, d^+, D_q^-\right) = \frac{exp(f(q, d^+)/\tau)}{exp(f(q, d^+)/\tau) + \sum_{d^- \in D_q^-} exp(f(q, d^-)/\tau)}$$

wherein q is the semantic vector of the first query text, $d^+$ is the semantic vector of the first retrieval text, $d^-$ is the semantic vector of the second retrieval text, $D_q^-$ is a semantic vector set to which the semantic vector of the second retrieval text belongs, $f(q, d^+)$ is the degree of relevance between the semantic vector of the first query text and the semantic vector of the first retrieval text, $f(q, d^-)$ is the degree of relevance between the semantic vector of the first query text and the semantic vector of the second retrieval text, and $\tau$ is a temperature parameter corresponding to the first information retrieval model.

11. A computer device, wherein the device comprises a processor, a transceiver, and a memory, wherein

the processor and the transceiver are configured to: be coupled to the memory, and read and **run** instructions **in** the memory, to implement the method according to any one of claims 1 to 5.

**12.** A chip, comprising a processor and an interface, wherein the processor is coupled to the interface, the interface is configured to receive or output a signal, and the processor is configured to execute code instructions, for performing the method according to any one of claims 1 to 5.

**13.** A computer-readable storage medium, wherein the computer-readable storage medium stores program instructions, and when the program instructions are run, the method according to any one of claims 1 to 5 is performed.

FIG. 1A

Interaction interface

Voice/Query statement/Text...

Voice response/Response statement/Text...

...

Memory

Processor

Data training/Machine learning/Deep learning

Searching/Inference/Decision-making

...

Data processing device (server)

EP 4 764 888 A1

FIG. 1B

300

Execution device 210

Data storage system 250

Communication network

Local device 301

Local device 302

Examples

FIG. 1C

200

Data collection
device 260

Data flow

Database
230

Training device
220

Data
flow

Execution device 210

Client
device
240

Input
data

I/O
interface
212

Target model/
rule 201

Calculation module 211

Data storage
system 250

Output
result

Association
functional
module
213

FIG. 2

| | |
|---|---|
| Obtain training data in a first training data set and training data in a second training data set | S301 |
| Update a first information retrieval model based on the training data in the first training data set, to obtain a second information retrieval model | S302 |
| Update the second information retrieval model based on the training data in the second training data set, to obtain a third information retrieval model | S303 |

FIG. 3

FIG. 4

FIG. 5

MLM loss

MLM loss

First semantic vector

Second semantic vector

Encoder

Decoder

| | | ... | |

| | | ... | |

| ■ | and | technology | are | ■ | productive | force |

Masked text 1

| ■ | and | technology | are | M | ■ | ■ |

Masked text 2

Mask (mask)

Mask (mask)

| Science | and | technology | are | primary | productive | force |

FIG. 6

Processing unit 701

Transceiver unit 702

Apparatus 700 for training a semantic
vector–based information retrieval model

FIG. 7

Training
device 220

Apparatus 800 for training a semantic
vector–based information retrieval model

Memory 801

Processor 802

Bus 804

Communication
interface 803

FIG. 8

## INTERNATIONAL SEARCH REPORT

| International application No. |
|---|
| **PCT/CN2024/094382** |

**A.    CLASSIFICATION OF SUBJECT MATTER**

G06F16/335(2019.01)i

According to International Patent Classification (IPC) or to both national classification and IPC

**B.    FIELDS SEARCHED**

Minimum documentation searched (classification system followed by classification symbols)

IPC：G06F

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 查询文本, 第二, 多个, 更新, 检索, 检索文本, 两个, 文本, 向量, 训练, 训练集, 训练数据集, 训练样本集, 训练样本数据集, 语义, label, retrieval, semantic, second training data, training model, information retrieval model, training data set?

**C.    DOCUMENTS CONSIDERED TO BE RELEVANT**

| Category* | Citation of document, with indication, where appropriate, of the relevant passages | Relevant to claim No. |
|---|---|---|
| A | CN 109857845 A (BEIJING QIYI CENTURY SCIENCE & TECHNOLOGY CO., LTD.) 07 June 2019 (2019-06-07)<br>description, paragraphs [0052]-[0226] | 1-13 |
| A | CN 114003707 A (BEIJING KINGSOFT DIGITAL ENTERTAINMENT TECHNOLOGY CO., LTD.) 01 February 2022 (2022-02-01)<br>entire document | 1-13 |
| A | CN 111737406 A (TENCENT TECHNOLOGY (SHENZHEN) CO., LTD.) 02 October 2020 (2020-10-02)<br>entire document | 1-13 |
| A | WO 2022134360 A1 (PING AN TECHNOLOGY (SHENZHEN) CO., LTD.) 30 June 2022 (2022-06-30)<br>entire document | 1-13 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 August 2024** | **21 August 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/094382**

| Patent document cited in search report | | | Publication date (day/month/year) | Patent family member(s) | Publication date (day/month/year) |
|---|---|---|---|---|---|
| CN | 109857845 | A | 07 June 2019 | None | |
| CN | 114003707 | A | 01 February 2022 | None | |
| CN | 111737406 | A | 02 October 2020 | None | |
| WO | 2022134360 | A1 | 30 June 2022 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202311159877